# FASCICULE DE BREVET EUROPEEN

(11) **EP 3 468 688 B1**
(45) Date de publication et mention de la délivrance du brevet: **07.10.2020**
(21) Numéro de dépôt: 17731624.7
(22) Date de dépôt: 31.05.2017
(51) Int. Cl.: B01D 29/21

(54) **FILTRE À CARBURANT À FORTE TENUE EN GIVRAGE**
KRAFTSTOFFFILTER MIT HOHER BESTÄNDIGKEIT GEGEN VEREISUNG
FUEL FILTER HAVING HIGH RESISTANCE TO ICING

(30) Priorité: 08.06.2016 FR 1655233
(43) Date de publication de la demande: 17.04.2019
(73) Titulaire: Safran Aircraft Engines, 75015 Paris (FR)
(72) Inventeur: RODRIGUES, José, 77550 Moissy Crayamel (FR); VERTENOEUIL, Philippe, 77550 Moissy Crayamel (FR); CHAUVEAU, Thomas, 77550 Moissy Crayamel (FR); WAISSI, Bellal, 77550 Moissy Crayamel (FR)
(74) Mandataire: Cabinet Camus Lebkiri
(86) Numéro de dépôt international: PCT/FR2017/051361
(87) Numéro de publication internationale: WO 2017/212142

(56) Documents cités:
- EP-A2- 2 535 550
- WO-A1-02/053258
- JP-U- H0 270 706
- US-A1- 2003 196 419

## Description

### DOMAINE TECHNIQUE DE L'INVENTION

L'invention a pour objet un filtre à carburant à forte tenue en givrage. Le domaine de l'invention est celui du filtrage dans des systèmes d'alimentation en carburant. Plus particulièrement le domaine de l'invention est celui du filtrage dans les systèmes d'alimentation en aéronautique.

### ETAT DE LA TECHNIQUE ANTERIEURE

Dans un système d'alimentation en carburant, le carburant passe usuellement dans une partie basse pression d'une pompe à carburant, puis dans des échangeurs. Le carburant se dirige ensuite vers un filtre puis passe à travers une pompe haute pression. Le carburant passe ensuite dans un régulateur de carburant puis traverse des injecteurs avant d'être injecté dans une chambre de combustion.

Le filtre à carburant filtre des contaminants provenant de réservoirs et plus généralement de l'amont du système afin de délivrer un carburant propre aux organes sensibles présents en aval du système d'alimentation.

L'intégration de filtres dans les systèmes fluides présente deux difficultés principales. La première est la détection de leur colmatage par les contaminants, afin de prévoir un remplacement du filtre. La seconde est leur sensibilité au givrage qui engendre un colmatage précoce du filtre.

Cette tenue au givrage du système carburant est une exigence de certification (CS-E 560 (e)). Cette exigence est très contraignante et il peut s'avérer nécessaire d'améliorer la tenue au givrage.

Un filtre à carburant est principalement équipé d'une cartouche filtrante et d'un clapet de bypass, ou bypass, ou « clapet de dérivation », qui s'ouvre en cas de colmatage de la cartouche.

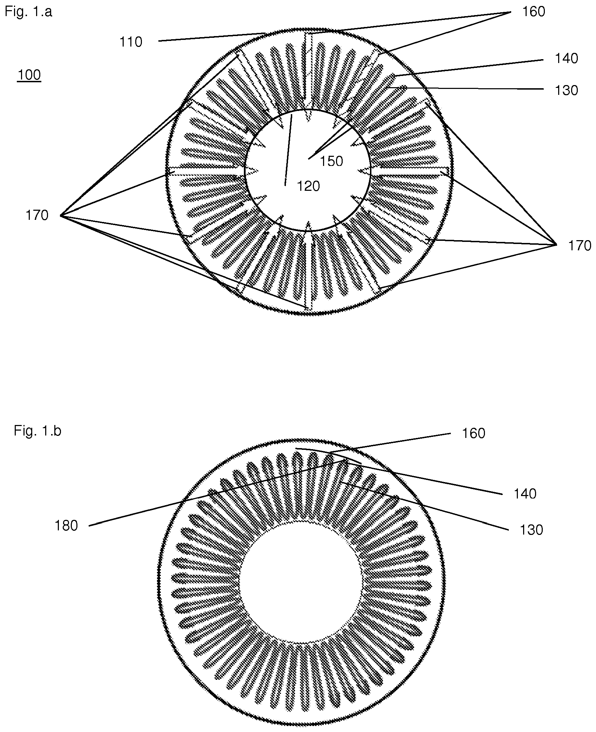

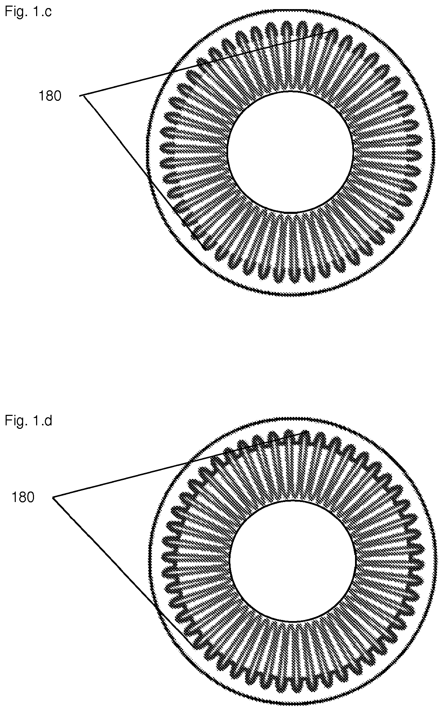

La figure 1.a montre une vue en coupe d'un filtre 100 de l'état de la technique. La figure 1.a montre que le filtre 100 de l'état de la technique compote un carter 110 cylindrique dans lequel on introduit une cartouche filtrante.

La figure 1.a montre qu'une cartouche filtrante comporte un noyau 120 cylindrique sur lequel on a fixé un media filtrant. Classiquement un media filtrant est une toile plissée. Le carburant est introduit dans le filtre et doit traverser le media filtrant pour parvenir à l'intérieur du noyau et poursuivre son écoulement dans le système d'alimentation auquel appartient le filtre 100 de l'état de la technique.

La figure 1.a montre un media filtrant composé de plis 130, chaque pli ayant une pliure 140 externe et des pliures internes 150 qu'il partage avec les plis adjacents.

Le média filtrant est fixé à deux flasques collés aux deux bases du cylindre formé par le media, le noyau cylindrique étant installé au centre entre les deux flasques afin de rigidifier l'ensemble mécaniquement. Une flasque est, par exemple, une couronne dont le grand rayon correspond au rayon du cylindre et dont le petit rayon correspond au rayon du noyau. Une flasque est, par exemple, un disque dont le rayon est égal à celui du cylindre.

La figure 1.a illustre une zone 160 d'arrivée de carburant correspondant à une fraction angulaire, environ 1/12 dans notre exemple, du cylindre constitué par le filtre.

La figure 1.a illustre aussi le sens 170 de circulation du carburant dans le filtre. Le carburant arrive depuis la zone d'admission, correspondant au secteur angulaire 160, puis se diffuse sur la périphérie de filtre, puis vers le noyau du filtre.

Lors d'une période de givrage du système d'alimentation en carburant, la glace, issue de l'eau contenue dans le carburant sous température négative, vient s'accumuler continuellement, relativement rapidement, sur la cartouche jusqu'à la colmater et donc provoquer l'ouverture du bypass. Par la suite, la partie aval du système carburant est soumise au givre, et également à la contamination (Le carburant ne traversant pas la cartouche filtrante, il n'est plus filtré).

La figure 1.b illustre une première étape de givrage au cours de laquelle de la glace 180 se dépose sur les pliures externes des plis. Dans un premier temps la glace épargne les plis situés à l'opposé, symétriquement par rapport à l'axe du cylindre du noyau, de l'arrivée de carburant 160.

La figure 1.c illustre une deuxième étape de givrage au cours de laquelle toutes les pliures externes sont recouvertes de glace 180.

Enfin la figure 1.d illustre une troisième étape de givrage dans laquelle le filtre de l'état de la technique est obstrué, la glace 180 ayant colmaté les espaces libres entre les pliures externes. A ce stade le système d'alimentation ouvre le bypass du filtre et du carburant non filtré arrive en aval du système d'alimentation.

L'une des caractéristiques clés d'un filtre à carburant lors de l'essai de givrage est la durée avant ouverture du bypass du filtre.

En effet, les périodes de givrage du carburant sont notamment les démarrages à froid du moteur. Or, ces périodes sont, par nature, transitoires, de l'ordre de quelques minutes à quelques dizaines de minutes. Une fois le démarrage passé, le moteur et ses systèmes commencent à chauffer et on sort des conditions dites givrantes.

Dans l'état de la technique la glace vient se déposer continument avec l'arrivée du carburant, c'est-à-dire selon le sens de circulation illustré par les figures. Les plis se colmatent un par un en partant de la zone d'arrivée du carburant jusqu'à la zone diamétralement opposée.

Il suffit d'un faible volume de glace pour recouvrir d'une pellicule de glace une grande quantité de plis et ainsi fortement colmater la cartouche. En effet, les plis sont colmatés dès que la glace accumulée couvre leur pliure externe.

Les documents EP 2 535 550 A2, US 2003/0196419 A1 et WO 02/053258 A1 divulgent des cartouches cylindriques de filtrage avec en périphérie un média filtrant plissé et une zone sans plis.

L'invention propose une solution pour retarder le colmatage d'un filtre et donc pour retarder l'ouverture d'un bypass.

### EXPOSE DE L'INVENTION

La solution de l'invention consiste à créer une zone sans plis sur le secteur angulaire de la cartouche au niveau de l'arrivée du carburant. Le carburant sera de facto dirigé vers cette zone d'accrétion de glace privilégiée à son arrivée dans le filtre.

La zone étant vide, elle permettra l'expansion d'un grand volume de glace tout en gardant une faible surface de plis recouverte de glace.

Afin de rester à surface filtrante égale par rapport à un filtre de l'état de la technique et ainsi garder la même capacité à retenir de la contamination, on va concentrer les plis dans la zone diamétralement opposée à l'arrivée de carburant.

Dans ce dessein, un aspect de l'invention se rapporte à une cartouche pour dispositif de filtrage selon la revendication 1.

Outre les caractéristiques principales de la revendication 1, le dispositif selon l'invention peut présenter une ou plusieurs caractéristiques complémentaires parmi les suivantes, considérées individuellement ou selon les combinaisons techniquement possibles:
- la cartouche comporte un noyau cylindrique, des pliures internes de la toile plissée arrangée en cylindre autour du noyau étant collées sur des flasques aux bases du cylindre formé par le media filtrant ;
- la toile plissée arrangée en cylindre comporte deux feuilles une première feuille plissée et une deuxième feuille non plissée ;
- la densité de plis est fonction du secteur angulaire.

### BREVE DESCRIPTION DES FIGURES

D'autres caractéristiques et avantages de l'invention ressortiront à la lecture de la description qui suit, en référence aux figures annexées, qui illustrent :
- La figure 1.a, une vue en coupe d'un filtre de l'état de la technique avec une indication du sens d'arrivée et de circulation du carburant dans le filtre ;
- Les figures 1.b à 1.d, une illustration du colmatage progressif d'un filtre de l'état de la technique ;
   - Figure 1.b, démarrage du givrage sur les parties extérieures des plis ;
   - Figure 1.c, le givrage a colonisé tous les plis ;
   - Figure 1.d, le filtre est colmaté ;
- La figure 2.a, une vue en coupe d'un filtre utilisant une cartouche selon l'invention ;
- Les figures 2b à 2.e, une illustration de colmatage progressif d'un filtre utilisant une cartouche selon l'invention ;

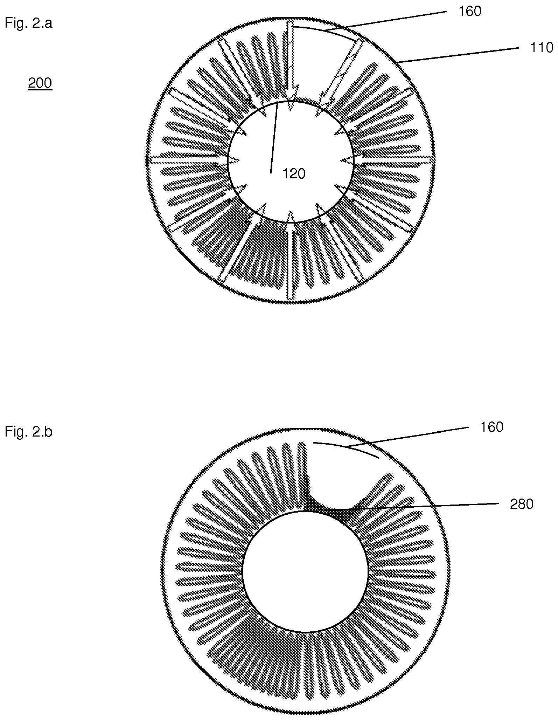

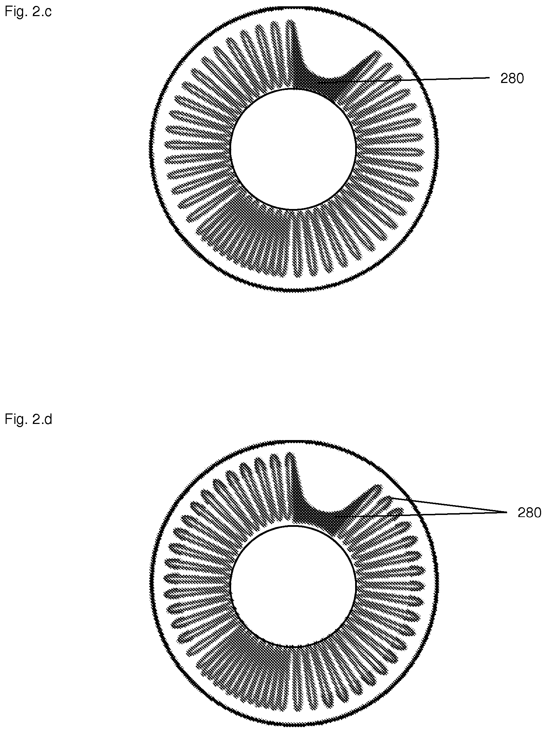

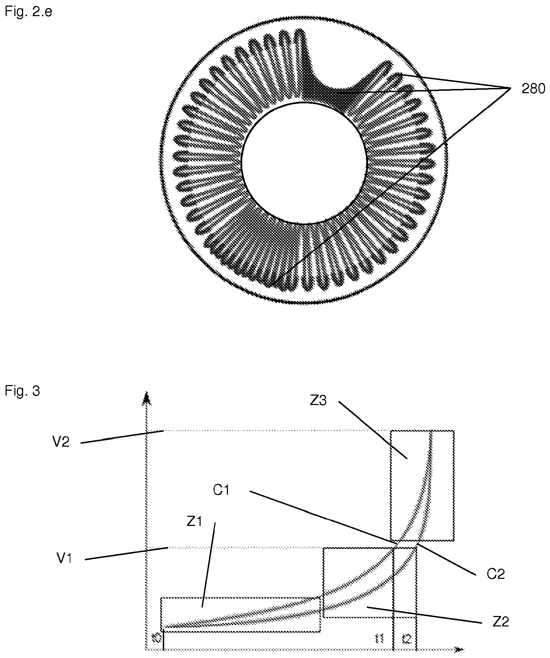

   - Figure 2.b, démarrage du givrage dans la zone prévue pour concentrer le givrage ;
   - Figure 2.c, le givrage s'étend dans la zone prévue pour le concentrer ;
   - Figure 2.d, le givrage commence à coloniser la surface des plis ;
   - Figure 2.e, le givrage s'étend à tous les plis sans pour autant avoir colmaté le filtre ;
- La figure 3, une illustration du gain obtenu avec l'invention.

Pour plus de clarté, les éléments identiques ou similaires sont repérés par des signes de référence identiques sur l'ensemble des figures.

L'invention sera mieux comprise la lecture de la description qui suit et à l'examen des figures qui l'accompagnent. Celles-ci sont présentées à titre indicatif et nullement limitatif de l'invention.

### DESCRIPTION DETAILLE D'UN MODE DE REALISATION

La figure 2.a montre un filtre 200 comportant un carter 110 dans lequel on a introduit une cartouche de filtrage selon l'invention. On notre ici que le carter ne change pas entre l'état de la technique et l'invention.
La figure 2.a montre, une zone 160, correspondant à une zone d'admission du carburant dans le carter, dans laquelle la cartouche ne comporte pas de plis.
Dans l'invention, au niveau du secteur angulaire correspondant à la zone d'admission du carburant dans le filtre, le media filtrant est fixé à plat sur le noyau de la cartouche.
On réalise donc un plissage non homogène du média filtrant. Comme le pouvoir d'un filtre est lié à la surface du média filtrant, le fait qu'il existe une zone non plissée implique une densification de la répartition des plis dans les zones plissées.
En particulier on arrange le media filtrant pour obtenir une zone de plis concentrés dans une zone diamétralement opposée à la zone sans plis.
On obtient ainsi une cartouche pour laquelle la densité de plis dépend du secteur angulaire.
On obtient ainsi une cartouche asymétrique c'est-à-dire une cartouche pour laquelle la densité de plis n'est pas constante en fonction du secteur angulaire de la cartouche considérée. Cela implique qu'une telle cartouche a un sens d'introduction dans le carter : la zone sans plis doit se trouver face à l'arrivée de carburant.

Dans une variante préférée on créée une zone à forte densité de plis dans le secteur angulaire diamétralement opposé au secteur angulaire d'admission du carburant. On créée ainsi un secteur à forte densité de plis. Dans cette variante les zones intermédiaires, entre la zone sans plis et la zone à forte densité de plis, la densité de plis est celle d'un filtre standard.
Ce plissage peut être réalisé avec un média filtrant d'épaisseur constante, c'est-à-dire en utilisant une feuille de media filtrant continue.
Dans une variante de l'invention on utilise deux feuilles de media filtrant, une pour la zone plissée, une pour la zone sans plis, que l'on colle de manière jointive, au niveau d'une pliure interne, sur le noyau de la cartouche. On limite ainsi une éventuelle perte de surface filtrante due à l'usage de deux feuilles.
Une fois la mise en plis réalisée et les media filtrant collés aux flasques de la cartouche on observe que le cycle d'obturation par givrage évolue favorablement.
La description détaille la mise en œuvre d'un système d'alimentation en carburant, mais son enseignement vaut encore pour tout système d'alimentation faisant transiter un fluide.
La figure 2.b illustre une première étape de givrage, correspondant à la première étape de givrage d'un filtre de l'état de la technique, au cours de laquelle de la glace 180 se dépose sur les pliures externes des plis. Pour un filtre selon l'invention, dans cette première étape de la glace 280 se dépose intégralement dans la zone 160 sans plis et épargne intégralement tous les plis de la cartouche selon l'invention.
La figure 2.c illustre une deuxième étape de givrage, correspondant à la deuxième étape de givrage d'un filtre de l'état de la technique, au cours de laquelle de la glace 180 se dépose sur toutes les pliures externes des plis. Pour un filtre selon l'invention, dans cette deuxième étape la glace 280 continue à se déposer, en s'épaississant, intégralement dans la zone sans plis et épargne intégralement tous les plis de la cartouche selon l'invention.
La figure 2.d illustre une troisième étape de givrage, correspondant à la troisième étape de givrage d'un filtre de l'état de la technique, au cours de laquelle la glace 180 a obstrué le filtre de l'état de la technique. La figure 2.d montre qu'à cette étape la glace 280 n'a pas encore colonisé toutes les pliures externes du media filtrant.
La figure 2.e illustre une quatrième étape de givrage, correspondant à une étape de givrage d'un filtre de l'état de la technique dans laquelle le filtre de l'état de la technique est colmaté. Dans cette étape le filtre selon l'invention est toujours opérationnel bien que la glace 280 ait colonisé toutes les pliures externes.
Pour un filtre selon l'invention, dans cette troisième étape la glace continue d'épaissir dans la zone sans plis et commence à coloniser une partie des pliures externes. Le filtre selon l'invention reste donc opérationnel. Il ne sera colmaté que dans une étape ultérieure.
Avec un filtre utilisant une cartouche selon l'invention, l'obturation du filtre, et donc l'ouverture du bypass, est retardée.
La figure 3 montre un graphique avec en abscisse le temps et en ordonné un pourcentage d'obturation. En ordonnée il y a deux valeurs remarquables :
- Une première valeur V1 correspondant à l'ouverture du bypass,
- Une deuxième valeur V2 correspondant à 99% d'obturation.
La figure 3 montre une première courbe C1 correspondant à un filtre de l'état de la technique, une deuxième courbe C2 correspondant à un filtre utilisant une cartouche selon l'invention.
La figure 3 montre également :
- Une zone Z1 correspond à la première phase de colmatage de la cartouche, c'est-à-dire la phase où la glace commence par s'accumuler dans la zone où les plis ont été déconcentrés
- Une zone Z2 correspond à la deuxième phase, où la glace a atteint la partie de la cartouche où les plis sont identiques entre une cartouche classique et la cartouche asymétrique
- Une zone Z3 correspond à la dernière phase, où la glace a colmaté la partie de la cartouche où le plissage a été concentré.
Dans la zone Z1, on a donc une cartouche selon l'invention qui, pour une même durée (donc une même quantité de glace qui arrive sur la cartouche), se colmate moins vite (l'écart de pression aux bornes d'entrée et de sortie de la cartouche augmente moins vite). Cela est représenté par la chronologie de l'accumulation de glace illustré plus haut.
Dans la zone Z2, les deux cartouches se comportent de la même manière vis-à-vis de la glace, on n'a donc plus d'augmentation de l'écart entre les deux courbes.
Dans la zone Z3, les deux courbes se rejoignent car la cartouche selon l'invention se colmate plus vite que la cartouche de l'état de la technique. En effet, une fois que la glace a atteint la zone où les plis ont été condensés, la glace peut moins atteindre les plis que dans le cas d'une cartouche classique, et donc un même volume de glace « obstrue » une plus grande proportion de cartouche.
Ceci n'est pas un problème puisque cette zone Z3 est purement théorique en cas de présence réelle d'un clapet de dérivation. En effet, on est sensé avoir dépassé le seuil d'ouverture dudit clapet, donc plus aucun débit ni glace n'arrive sur la cartouche filtrante.

Le constat que les deux cartouches arrivent au même différentiel de pression en fin de givrage est du au fait qu'on a colmaté la même surface de filtrage. En effet, on a atteint plus de surface de plis dans la première phase (grâce à la déconcentration des plis), mais on en a moins atteint dans la dernière phase (à cause de la concentration des plis).
A 100% de givrage, les deux courbes sont censées théoriquement donner un écart de pression infini : le filtre est obturé, plus rien n'en sort.
La figure 3 illustre qu'avec une cartouche selon l'invention le clapet de dérivation est ouvert à t2 > t1, ou t1 est 'instant d'ouverture du clapet de dérivation pour un filtre de l'état de la technique.
La différence t2 - t1 représente l'augmentation de la durée avant ouverture du clapet de dérivation.
De manière quantitative, il suffit de dimensionner un système d'alimentation pour avoir t2 - t1 >= 1 minute en ordre de grandeur pour que la solution commence à être particulièrement intéressante (selon ordre de grandeur des régimes transitoires moteurs où se produisent les conditions givrantes, comme les démarrages). Dans tous les cas de dimensionnement, t2 restant supérieur à t1, l'invention est intéressante.
Un autre avantage de l'invention est que l'on fonctionne pendant la durée [t1-t0] avec moins de perte de charge dans le filtre, ce qui est bénéfique pour les équipements en aval du filtre qui vont être ainsi mieux alimentés pendant le givrage.
On peut imaginer également que les deux avantages vont être en pratique encore plus important que représentés, car la solution, basée sur le principe de l'augmentation de la surface atteignable au début du givrage, peut créer un autre phénomène bénéfique.

En effet, dans la première zone de la cartouche, il est très probable, selon retour d'expérience sur les équipements, que les turbulences inhérentes à tout écoulement confiné d'une certaine vitesse, provoque une accrétion supplémentaire de glace dans le volume inter-pli. Auquel cas, on augmente non seulement t2-t1, mais on augmente aussi la capacité d'accumulation de glace totale de la cartouche, ce qui se traduit par une courbe bleue qui atteindra le stade 99% colmaté plus tard que la courbe rouge (et non plus simultanément).
Ainsi avec l'invention on augmente la durée de tenue au givre sans impacter la capacité à filtrer les contaminants, ni l'encombrement, ni la masse du filtre et on répond donc à un problème majeur de l'aéronautique.
Les avantages sont multiples :
- Beaucoup moins d'occurrence de dérivation (clapet) du filtre en cas de colmatage léger: augmentation de la durée de vie des équipements en aval qui ne verront donc que très peu de contamination ;
- Augmentation de la durée de vie des équipements également via la diminution de la perte de charge au cours du givrage (équipements en aval bien alimentés) ;
- Respect des normes relatives au givrage facilité (on peut régler l'ouverture du clapet de dérivation avec plus de liberté car on arrive moins vite à de forts écarts de pression) ;
- Extension du domaine d'utilisation (moins de limitation d'utilisation de l'avion, même en cas de température d'entrée du carburant moteur < 5°C comme actuellement) ;
- Logistique facilitée car il n'y a plus besoin d'antigel.

## Revendications

1. Cartouche pour dispositif de filtrage, la cartouche comportant une toile plissée arrangée en cylindre, les plis étant parallèles à la génératrice du cylindre, le cylindre comportant :
- une zone sans plis, la zone sans plis étant destinée à être positionnée en face d'une arrivée de carburant dans le dispositif de filtrage,
- une zone à forte densité de plis, ladite zone à forte densité de plis étant diamétralement opposée à la zone sans plis, la densité des plis entre la zone sans plis et la zone à forte densité de plis étant inférieure à ladite forte densité.

2. Cartouche pour dispositif de filtrage selon la revendication 1, **caractérisée en ce que** la cartouche comporte un noyau cylindrique, des pliures internes de la toile plissée arrangée en cylindre autour du noyau étant collées sur des flasques aux bases du cylindre formé par le media filtrant.

3. Cartouche pour dispositif de filtrage selon l'une quelconque des revendications 1 à 2, **caractérisée en ce que** la toile plissée arrangée en cylindre comporte deux feuilles, une première feuille plissée et une deuxième feuille non plissée.

4. Cartouche pour dispositif de filtrage selon l'une quelconque des revendications 1 à 3, **caractérisée en ce que** la densité de plis est fonction du secteur angulaire.

## Patentansprüche

1. Patrone für Filtervorrichtung, wobei die Patrone ein als Zylinder angeordnetes, gefaltetes Netz umfasst, wobei die Falten parallel zur Mantellinie des Zylinders sind, wobei der Zylinder umfasst:
- einen Bereich ohne Falten, wobei der Bereich ohne Falten dazu bestimmt ist, gegenüber einer Kraftstoffzufuhr in der Filtervorrichtung positioniert zu sein,
- einen Bereich mit hoher Faltendichte, wobei der genannte Bereich mit hoher Faltendichte dem Bereich ohne Falten diametral entgegengesetzt ist, wobei die Dichte der Falten zwischen dem Bereich ohne Falten und dem Bereich mit hoher Faltendichte niedriger ist als die genannte hohe Dichte.

2. Patrone für Filtervorrichtung gemäß Anspruch 1, **dadurch gekennzeichnet, dass** die Patrone einen zylindrischen Kern umfasst, wobei interne Falten des als Zylinder angeordneten gefalteten Netzes um den Kern auf den Flanschen an den Basen des Zylinders verklebt sind, der von dem filternden Medium gebildet ist.

3. Patrone für Filtervorrichtung gemäß irgendeinem der Ansprüche 1 bis 2, **dadurch gekennzeichnet, dass** das als Zylinder angeordnete gefaltete Netz zwei Blätter umfasst, ein erstes gefaltetes Blatt und ein zweites nicht gefaltetes Blatt.

4. Patrone für Filtervorrichtung gemäß irgendeinem der Ansprüche 1 bis 3, **dadurch gekennzeichnet, dass** die Faltendichte von dem Winkelsektor abhängt.

## Claims

1. Cartridge for a filtering device, the cartridge comprising a pleated canvas arranged in a cylinder, the pleats being parallel to the generatrix of the cylinder, the cylinder comprising:
- a non-pleated zone, the non-pleated zone being intended to be positioned facing a fuel inlet into the filtering device,
- a zone of high-density pleats, said zone of high-density pleats being diametrically opposite to the non-pleated zone, the density of pleats between the non-pleated zone and the zone of high-density pleats being lower than said high density.

2. Cartridge for a filtering device according to claim 1, **characterised in that** the cartridge comprises a cylindrical core, inner folds of the pleated canvas arranged in a cylinder around the core being bonded onto flanges at the bases of the cylinder formed by the filtering media.

3. Cartridge for a filtering device according to any one of claims 1 and 2, **characterised in that** the pleated canvas arranged in a cylinder comprises two sheets, a first pleated sheet and a second non-pleated sheet.

4. Cartridge for a filtering device according to any one of claims 1 to 3, **characterised in that** the pleats density is a function of the angular sector.
